# EUROPEAN PATENT SPECIFICATION

(11) **EP 3 919 247 B1**
(45) Date of publication and mention of the grant of the patent: **28.02.2024**
(21) Application number: 20748719.0
(22) Date of filing: 30.01.2020
(51) Int. Cl.: B28B 11/14, B28B 5/02, B28B 1/30, B23K 26/08, B23K 26/082, B23K 26/38, C04B 35/581, C04B 35/587, C04B 35/622, C04B 35/638

(54) **METHOD FOR MANUFACTURING SINGLE SHEET-TYPE GREEN SHEET, METHOD FOR MANUFACTURING SILICON NITRIDE SINTERED BODY, SINGLE SHEET-TYPE GREEN SHEET AND SILICON NITRIDE SINTERED BODY**
VERFAHREN ZUR HERSTELLUNG EINER EINSCHICHTIGEN GRÜNFOLIE, VERFAHREN ZUR HERSTELLUNG EINES SILICIUMNITRID-SINTERKÖRPERS, EINSCHICHTIGE GRÜNFOLIE UND SINTERKÖRPER AUS SILICIUMNITRID
PROCÉDÉ DE FABRICATION DE FEUILLE DE CÉRAMIQUE CRUE DU TYPE FEUILLE UNIQUE, PROCÉDÉ DE FABRICATION DE CORPS FRITTÉ DE NITRURE DE SILICIUM, FEUILLE DE CÉRAMIQUE CRUE DU TYPE FEUILLE UNIQUE ET CORPS FRITTÉ DE NITRURE DE SILICIUM

(30) Priority: 30.01.2019 JP 2019013761
(43) Date of publication of application: 08.12.2021
(73) Proprietor: Denka Company Limited, Tokyo 103-8338 (JP)
(72) Inventor: YUASA Akimasa, Omuta-shi, Fukuoka 836-8510 (JP); ESHIMA Yoshiyuki, Omuta-shi, Fukuoka 836-8510 (JP); WATANABE Ryuhei, Omuta-shi, Fukuoka 836-8510 (JP); KOBASHI Seiji, Omuta-shi, Fukuoka 836-8510 (JP); NISHIMURA Koji, Omuta-shi, Fukuoka 836-8510 (JP)
(74) Representative: Gulde & Partner
(86) International application number: PCT/JP2020/003329
(87) International publication number: WO 2020/158843

(56) References cited:
- JP-A- H06 170 822
- JP-A- H09 129 500
- JP-A- 2004 235 544
- JP-A- 2005 123 288
- JP-A- 2009 144 079
- US-A1- 2003 052 104

## Description

### TECHNICAL FIELD

The present invention relates to a method for manufacturing a single sheet-type green sheet, a method for manufacturing a silicon nitride sintered body, a single sheet-type green sheet, and a silicon nitride sintered body.

### BACKGROUND ART

It has been known that a ceramic board is used as a base material of a circuit board for a power module. Such a ceramic board is manufactured such that a strip-shaped green sheet made of ceramic is cut to obtain single sheet-type green sheets, the obtained single sheet-type green sheets are laminated to obtain a laminate, and the laminate obtained by the single sheet-type green sheets being laminated is sintered.

Here, in Patent Document 1, a method for manufacturing a ceramic laminate including a cutting step of cutting a ceramic strip-shaped green sheet to obtain a plurality of single sheet-type green sheets, a laminating step of laminating the plurality of single sheet-type green sheets obtained by the cutting, and a sintering step of sintering the plurality of single sheet-type green sheets obtained by the laminating is disclosed. In the above-mentioned cutting step, the plurality of single sheet-type green sheets are obtained by cutting the strip-shaped green sheet using a plate-shaped cutting blade.

Patent Document 2 discloses to cut a ceramic green sheet a with a laser beam while applying a protective film in order to avoid formations of chips and burrs at the cutting edge.

Patent Document 3 discloses a technique to form incision lines on a ceramic green sheet with a laser and then pull it out by means of a suction head. In one embodiment, a peroration line of multiple micropores are created by intermittent laser irradiation. After the irradiation, the area surrounded by the perforation line is torn off by the suction head.

Patent Document 4 relates to the cutting of a laminate consisting of multiple layers of green sheets by a laser.

### RELATED DOCUMENT

### PATENT DOCUMENT

[Patent Document 1] JP 2017-065059 A
[Patent Document 2] JP H06 170822 A
[Patent Document 3] JP H09 129500 A
[Patent Document 4] US 2003/052104 A1

### SUMMARY OF THE INVENTION

### TECHNICAL PROBLEM

As described above, in the manufacturing method disclosed in Patent Document 1, the strip-shaped green sheet is cut using the cutting blade in the cutting step. Thus, this manufacturing method has the following problems. That is, chips may be generated from the cut surfaces of the single sheet-type green sheets by a cutting operation using the cutting blade, and the cutting blade may be worn by the repeated cutting operation, so that metal powder may be generated. In addition, in a case where the laminating step is performed with the generated chips and metal powder adhering to the surfaces of the single sheet-type green sheets, unevenness defects occur in the single sheet-type green sheets. Furthermore, during the cutting of the strip-shaped green sheet using the cutting blade, the cutting blade moves while pressurizing the strip-shaped green sheet with a blade edge. Therefore, the cut surfaces of the single sheet-type green sheets, which are formed by the cutting with the cutting blade, are formed while the strip-shaped green sheet is pulled by the blade edge. As a result, cracks may be generated near the cut surfaces of the single sheet-type green sheets.

As described above, the generation of unevenness defects and cracks results in a problem of a decrease in the yield of the ceramic board.

An object of the present invention is to provide a method for manufacturing a single sheet-type green sheet in which chips from a cut surface and cracks near the cut surface are hardly generated, and metal powder due to a cutting blade is not generated in a case where the strip-shaped green sheet is cut to obtain the single sheet-type green sheets.

### SOLUTION TO PROBLEM

The method according to the present invention is defined by claim 1. The method for manufacturing a single sheet-type green sheet of a first aspect of the present invention includes a transporting step of transporting a strip-shaped green sheet that contains ceramic along a longitudinal direction thereof, and an irradiation step of intermittently irradiating the transported strip-shaped green sheet with a laser beam to cut and separate the strip-shaped green sheet to obtain a single sheet-type green sheet. According to the present invention, the irradiation step is performed using a cutting portion comprising an irradiation portion and a moving mechanism, wherein the moving mechanism causes the irradiation portion to move and stop repeatedly so as to intermittently irradiate the laser beam by repeatedly irradiating the laser beam for a certain time period and non-irradiating for a certain time period.

According to an embodiment of the present invention, the laser beam with which the strip-shaped green sheet is irradiated in the irradiation step is emitted from an irradiation portion that emits a carbon dioxide laser beam.

According to an embodiment of the present invention, a step of performing doctor blade molding or extrusion molding on a slurry containing ceramic powder to have a strip shape to obtain the strip-shaped green sheet, is the step being performed before the transporting step, is further included.

According to an embodiment of the present invention, the ceramic powder includes silicon nitride powder or aluminum nitride powder.

According to an embodiment of the present invention, the single sheet-type green sheet that is manufactured by the method for manufacturing a single sheet-type green sheet is heated and sintered to obtain a silicon nitride sintered body.

The single sheet-type green sheet according to the present invention has a laser cut surface on at least one side surface.

According to the present invention, the laser cut surface has a surface roughness Ra of equal to or greater than 0.5 um and equal to or smaller than 2.0 um, and the laser cut surface has a surface roughness Rz of equal to or greater than 5.0 um and equal to or smaller than 12.0 µm.

The silicon nitride sintered body of the present invention is formed in a sheet shape as defined by claim 7.

### ADVANTAGEOUS EFFECTS OF INVENTION

According to the method for manufacturing a single sheet-type green sheet of the present invention, chips from the cut surface and cracks near the cut surface are hardly generated, and metal powder due to the cutting blade is not generated in a case where the strip-shaped green sheet is cut to obtain the single sheet-type green sheets.

### BRIEF DESCRIPTION OF THE DRAWINGS

The above and other objects, advantages and features of the present invention will be more apparent from the following description of certain preferred embodiments taken in conjunction with the accompanying drawings.

Fig. 1 is a flow chart illustrating a manufacturing process of a ceramic board of the present embodiment.
Fig. 2A is a diagram for explaining a molding step of the present embodiment, and is a schematic view for explaining a state in which a strip-shaped green sheet is produced from a slurry using a doctor blade molding device.
Fig. 2B is a diagram for explaining a cutting step of the present embodiment, and is a schematic view (side view) for explaining a state in which the strip-shaped green sheet is cut using a cutting device to produce a single sheet-type green sheet.
Fig. 2C is a schematic view of Fig. 2B when seen from the front.
Fig. 2D is a schematic view of a laminate of the present embodiment.
Fig. 3 is an SEM image of a cut surface of the single sheet-type green sheet of the present embodiment.
Fig. 4 is a table summarizing conditions and observation results of a first test.
Fig. 5A is an enlarged photograph of the vicinity of a cut surface of a single sheet-type green sheet of a first comparative example, in which the photograph is seen from an upper surface side in a thickness direction.
Fig. 5B is an SEM image of the cut surface of the single sheet-type green sheet of the first comparative example.
Fig. 6 is an enlarged photograph of the vicinity of a cut surface of a single sheet-type green sheet of a second comparative example, in which the photograph is seen from an upper surface side in a thickness direction.
Fig. 7 is an enlarged photograph of the vicinity of a cut surface of a single sheet-type green sheet of a third comparative example, in which the photograph is seen from an upper surface side in a thickness direction.
Fig. 8 is an enlarged photograph of the vicinity of a cut surface of a single sheet-type green sheet of a fourth comparative example, in which the photograph is seen from an upper surface side in a thickness direction.
Fig. 9 is an enlarged photograph of the vicinity of the cut surface of the single sheet-type green sheet of the present embodiment, in which the photograph is seen from an upper surface side in a thickness direction.
Fig. 10 is a table summarizing conditions and measurement results of a third test.

### DESCRIPTION OF EMBODIMENTS

### «Summary»

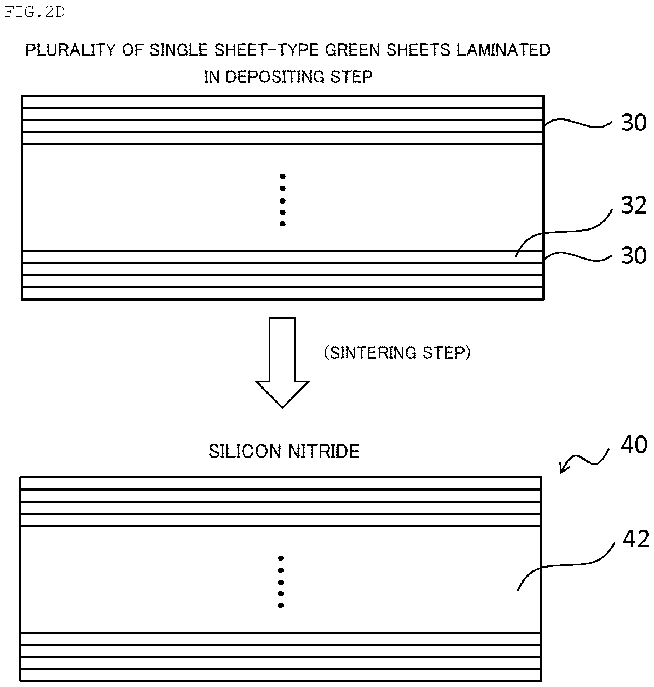

First, a method for manufacturing a silicon nitride sintered body 40 (see Fig. 2D) of the present embodiment will be described with reference to the drawings. Next, Example of the present embodiment will be described with reference to the drawings. In all the drawings referenced in the following description, the same components are denoted by the same reference numerals, and the description thereof will not be repeated as appropriate.

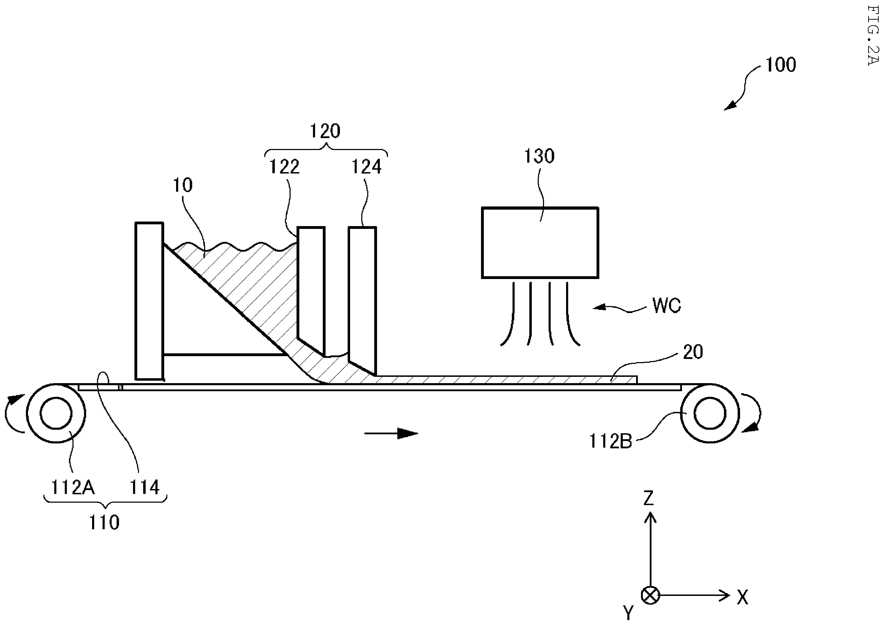

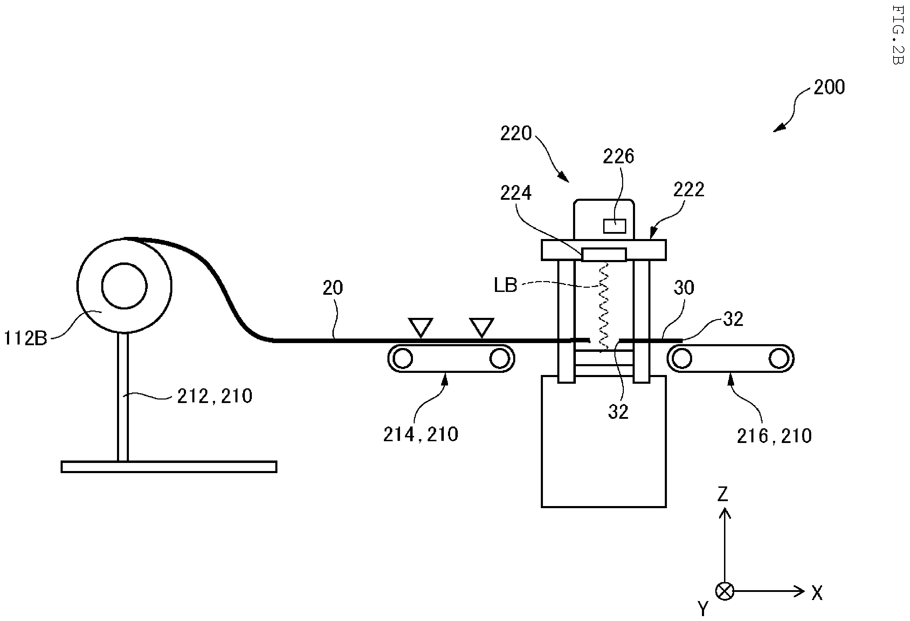

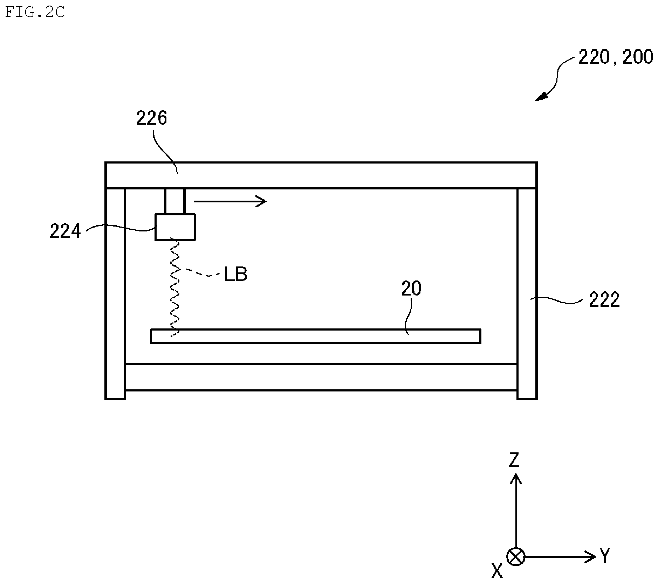

Here, the silicon nitride sintered body 40 is, for example, a ceramic board for a power module mounted on an electric vehicle, a railroad vehicle, or other industrial equipment. The silicon nitride sintered body 40 is obtained such that single sheet-type green sheets 30 (see Figs. 2B and 2C) described later are sintered in a laminated state, for example. Each of the single sheet-type green sheets 30 is obtained such that a strip-shaped green sheet 20 is cut (see Figs. 2A and 2B). That is, a relationship between the silicon nitride sintered body 40 and the single sheet-type green sheet 30 is a relationship between a finished product and an intermediate product (a product manufactured in a step before the finished product is obtained) or a relationship between a first intermediate product and a second intermediate product (a product manufactured in a step before the first intermediate product is obtained). Therefore, the single sheet-type green sheet 30 of the present embodiment is manufactured through steps at an intermediate stage of the method for manufacturing the silicon nitride sintered body 40 of the present embodiment, which will be described later. Therefore, the method for manufacturing the single sheet-type green sheet 30 of the present embodiment will be described in the description of the method for manufacturing the silicon nitride sintered body 40 of the present embodiment.

### <<Method for Manufacturing Silicon Nitride Sintered Body of Present Embodiment>>

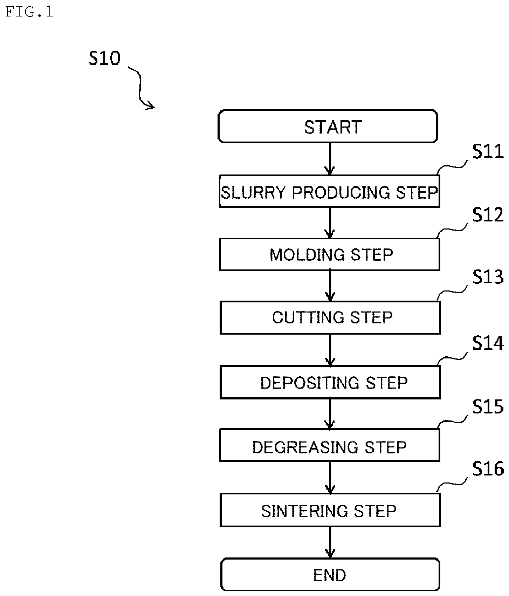

Hereinafter, the method for manufacturing the silicon nitride sintered body 40 of the present embodiment will be described with reference to Fig. 1, Fig. 2A, Fig. 2B, and Fig. 2C.

As illustrated in a flow chart of Fig. 1, the method for manufacturing the silicon nitride sintered body 40 of the present embodiment includes a slurry producing step, a molding step, a cutting step, a depositing step, a degreasing step, and a sintering step, and these steps are carried out in the described order.

In the flow chart of Fig. 1, the method for manufacturing the silicon nitride sintered body 40 is denoted by reference numeral S10, and the slurry producing step, the molding step, the cutting step, the depositing step, the degreasing step, and the sintering step are denoted by reference numerals S11, S12, S13, S14, S15, and S16, respectively.

### <Slurry Producing Step>

First, a slurry producing step S11 will be described. This step is a step of mixing raw material powder with an organic solvent described later to produce a slurry 10. The slurry 10 produced in this step (see Fig. 2A) is molded into the strip-shaped green sheet 20 in the next step (molding step).

The raw material powder of the slurry 10 is a powder containing a main component and a sintering aid, which will be described later. The main component is, for example, silicon nitride (Si₃N₄) of 80% by weight to 98.3% by mass, and the sintering aid is, for example, at least one rare earth element of 1% by weight to 10% by mass (expressed in terms of oxide) and magnesium (Mg) of 0.7% by weight to 10% by mass (expressed in terms of oxide) . A ratio at which silicon nitride powder is of an α-phase is preferably 20% to 100% in consideration of the density, bending strength, and thermal conductivity of the silicon nitride sintered body 40. Here, to give further details about the meaning of "to" used in the present specification, for example, "20% to 100%" means "equal to or more than 20% and equal to or less than 100%". In addition, "to" used in this specification means equal to or more than the description before "to" and equal to or less than the description after "to".

The reason why a ratio of silicon nitride (Si₃N₄) in the raw material powder is 80% by weight to 98.3% by mass as an example is that the bending strength and thermal conductivity of the obtained silicon nitride sintered body 40 are not too low, a denseness of the silicon nitride sintered body 40 due to lack of the sintering aid is ensured, and the like.

The reason why the ratio of at least one rare earth element in the raw material powder is 1% by weight to 10% by mass (expressed in terms of oxide) is that in a case where a ratio thereof is less than the ratio of 1% by weight to 10% by mass, the bond between the silicon nitride particles is weakened and cracks easily extend at grain boundaries, and in a case where a ratio is more than the ratio of 1% by weight to 10% by mass, the bending strength decreases and a ratio of grain boundary phases increases and the thermal conductivity decreases. The reason why the ratio of magnesium (Mg) in the raw material powder is 0.7% by weight to 10% by mass (expressed in terms of oxide) is that in a case where a ratio thereof is less than the ratio of 0.7% by weight to 10% by mass, a liquid phase produced at a low temperature is insufficient, and in a case where a ratio thereof is more than the ratio of 0.7% by weight to 10% by mass, the volatilization amount of Mg increases and holes are likely to be formed in the silicon nitride sintered body 40.

Here, a content of Mg is preferably 0.7% by weight to 7% by mass (expressed in terms of oxide), and more preferably 1% by weight to 5% by mass. In addition, a content of at least one rare earth element is preferably 2% by weight to 10% by mass (expressed in terms of oxide) . Therefore, a content of Si₃N₄ is preferably 83% by weight to 97.3% by mass, and more preferably 90% by weight to 97% by mass. As the rare earth element, Y, La, Ce, Nd, Pm, Sm, Eu, Gd, Dy, Ho, Er, Tm, Yb, Lu, and the like can be used, but Y is preferably used from the viewpoint of an increase in the density of the silicon nitride sintered body 40. It is preferable to use each of Mg and at least one rare earth element in the form of oxide powder.

Therefore, the sintering aid is preferably a combination of MgO powder and Y₂O₃ powder.

Hereinafter, for the simplification of the description, the raw material powder of silicon nitride is referred to as Si₃N₄ powder (also known as an example of silicon nitride powder or ceramic powder), the raw material powder of Mg is referred to as MgO powder, and the raw material powder of the rare earth element is referred to as Y₂O₃ powder. However, as described above, the raw material powder of silicon nitride and the raw material powder of the sintering aid may not be Si₃N₄ powder, and MgO powder and Y₂O₃ powder, respectively.

The Si₃N₄ powder, MgO powder, and Y₂O₃ powder blended as described above are mixed with a plasticizer, an organic binder, and an organic solvent to produce the slurry 10. Therefore, the slurry 10 produced in this step contains ceramic powder. Here, examples of the plasticizer include a phthalic acid-based plasticizer such as di-n-butylphthalate, a dibasic acid-based plasticizer such as di2-ethylhexyl sebacate, and the like. Examples of the organic binder include ethyl cellulose, polyvinyl butyral, an acrylic-based binder, and the like. Examples of the organic solvent include ethyl alcohol, toluene, acetone, MEK, and the like. A solid content concentration of the slurry 10 produced in this step is preferably 30% by weight to 70% by mass from the viewpoint of ease of molding in the next step (molding step).

The above is the description of the slurry producing step.

### <Molding Step>

Next, a molding step S12 will be described. This step is a step of producing the strip-shaped green sheet 20 from the slurry 10 as illustrated in Fig. 2A.

This step is carried out using a doctor blade molding device 100 illustrated in Fig. 2A. Here, the doctor blade molding device 100 is provided with a belt transporting mechanism 110, a molding unit 120, and a heating unit 130. The belt transporting mechanism 110 includes a roller 112A on an upstream, a roller 112B on a downstream, and a belt 114, and movement of the belt 114 from the roller 112 on the upstream to the roller 112 on the downstream (along an X direction) is made by the drive of the roller 112 on the downstream. The molding unit 120 is disposed on an upper side of the belt 114 (on a Z direction side of the belt 114) and faces the belt 114. The molding unit 120 is provided with an accommodating portion 122 accommodating the slurry 10 and a doctor blade 124.

In addition, as illustrated in Fig. 2A, the molding unit 120 forms the sheet-shaped slurry 10 having a film thickness, which is obtained such that the slurry 10 is brought out from the accommodating portion 122 due to its own weight and an adhesive force between the slurry 10 and the moving belt 114, and is regulated and defined by the doctor blade 124. The heating unit 130 blows warm air WC onto the slurry 10 having the defined film thickness on the belt 114 to form the slurry 10 into a sheet (the organic solvent is vaporized) . As a result, in the molding step, the strip-shaped green sheet 20 having a width defined from the slurry 10 (a Y direction in the drawing corresponds to a width direction) is produced. That is, in the molding step, the slurry 10 is formed into a strip shape by the doctor blade molding to obtain the strip-shaped green sheet 20 containing Si₃N₄ (ceramic) as an example.

As an example, this step is carried out after defoaming the slurry 10 that is produced in the slurry producing step S11 and thickening the slurry 10. In addition, the film thickness of the strip-shaped green sheet 20 produced in this step is set in consideration of a film thickness of the silicon nitride sintered body 40 to be finally produced. Along with this, regulation conditions (a distance from the belt 114, and the like) of the doctor blade 124 for regulating the slurry 10 to have the defined film thickness are also set in consideration of the film thickness of the silicon nitride sintered body 40 to be finally produced. Here, the film thickness of the strip-shaped green sheet 20 to be set is set to, for example, 0.25 mm to 1 mm depending on the film thickness of the silicon nitride sintered body 40 to be finally produced, but 0.25 mm to 0.9 mm is preferable, and 0.25 to 0.8 mm is more preferable.

The above is the description of the molding step.

### <Cutting Step>

Next, a cutting step S13 will be described. This step is a step of cutting the strip-shaped green sheet 20 to produce the single sheet-type green sheet 30 as illustrated in Fig. 2B.

This step is performed using a cutting device 200 illustrated in Fig. 2B. Here, the cutting device 200 is provided with a sheet transporting mechanism 210 and a cutting portion 220.

The sheet transporting mechanism 210 includes a supporting portion 212, a first transporting portion 214, and a second transporting portion 216. The supporting portion 212 rotatably supports the roller 112B (see Figs. 2A and 2B) with the strip-shaped green sheet 20 produced in the molding step being wound around an outer peripheral surface thereof. The first transporting portion 214 adjusts the posture of the strip-shaped green sheet 20 transported from the supporting portion 212 and transports the strip-shaped green sheet 20 to the cutting portion 220 along the X direction (along the longitudinal direction of the strip-shaped green sheet 20). The second transporting portion 216 transports the single sheet-type green sheet 30 produced by the strip-shaped green sheet 20 being cut at the cutting portion 220 to further downstream (to the X direction) .

The cutting portion 220 includes a housing 222, an irradiation portion 224, and a moving mechanism 226. The irradiation portion 224 emits a carbon dioxide laser beam LB (an example of a laser beam) as an example. The moving mechanism 226 causes the irradiation portion 224 to scan the strip-shaped green sheet 20 from one end to the other end thereof in the lateral direction (the Y direction in the drawing). The irradiation portion 224 and the moving mechanism 226 are mounted in the housing 222.

Then, in the cutting device 200 of the present embodiment, the sheet transporting mechanism 210 allows the strip-shaped green sheet 20 to be transported by the length of the single sheet-type green sheet 30 and to stop the transportation of the strip-shaped green sheet 20, and the strip-shaped green sheet 20 is cut by the cutting portion 220. In this case, the cutting portion 220 causes the irradiation portion 224 to emit the carbon dioxide laser beam LB while causing the moving mechanism 226 to move the irradiation portion 224 from one end side to the other end side of the strip-shaped green sheet 20 in the lateral direction along the Y direction. In addition, the irradiation portion 224 that performs the scanning through the moving mechanism 226 intermittently emits the carbon dioxide laser beam LB. Here, "intermittently" means to repeat irradiation for a certain time period and non-irradiation for a certain time period. Therefore, the moving mechanism 226 causes the irradiation portion 224 to move and stop repeatedly so as to cause the irradiation portion 224 to perform the scanning.

As described above, in this step, the strip-shaped green sheet 20 is irradiated with the carbon dioxide laser beam LB to cut the strip-shaped green sheet 20, so that the single sheet-type green sheet 30 is obtained. In addition, this step also includes a step of transporting the strip-shaped green sheet 20 by the sheet transporting mechanism 210 (transporting step), and a step of cutting the strip-shaped green sheet 20 by the cutting portion 220 to obtain the single sheet-type green sheet 30 (irradiation step).

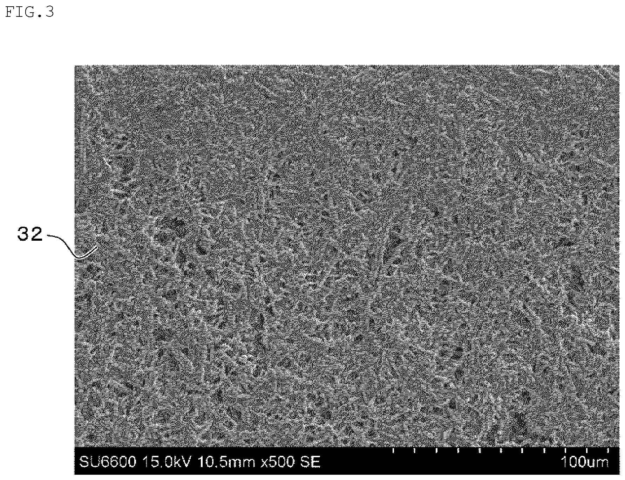

In the explanation of this step, an example of a laser beam LB is the carbon dioxide laser beam LB. However, a laser beam having a wavelength different from the wavelength of the carbon dioxide laser beam LB may be used as long as the light beam emitted from the irradiation portion 224 is a laser beam. For example, an infrared laser beam LB (IR laser beam LB), an ultraviolet laser beam LB (UV laser beam LB), and the like may be used. However, as in this step, the laser beam LB emitted from the irradiation portion 224 is preferably a carbon dioxide laser beam LB. The reason for this will be described in the description of Example described later. Fig. 3 is an SEM image of a cut surface 32 (an example of a laser cut surface) of the single sheet-type green sheet 30 produced by the cutting step of the present embodiment, and details of this SEM image will also be described later in the description of Example described later.

The above is the description of the cutting step.

### <Depositing Step>

Next, a depositing step S14 will be described. This step is a step of laminating a plurality of the strip-shaped green sheet 20 in the film thickness direction as illustrated in Fig. 2D. This step is a step performed for efficiently sintering the single sheet-type green sheet 30 in the subsequent step (sintering step S16).

In this step, as illustrated in Fig. 2D, the plurality of the single sheet-type green sheets 30 are deposited by interposing a non-reactive powder layer (not illustrated) therebetween, which will be described later. Here, in a case where the number of the single sheet-type green sheets 30 to be laminated is small, the number of sheets that can be processed in a sintering furnace (not illustrated) at one time in the subsequent sintering step S16 is small (the production efficiency decreases) . On the other hand, in a case where the number of the single sheet-type green sheets 30 to be laminated is large, binders contained in the single sheet-type green sheets 30 are unlikely to be decomposed in the next step (degreasing step S15). According to the above reasons, the number of the single sheet-type green sheets 30 to be laminated in this step is 8 to 100, and preferably 30 to 70.

The non-reactive powder layer of the present embodiment is, for example, a boron nitride powder layer (BN powder layer) having a film thickness of about 1 um to 20 um. The BN powder layer has a function of easily separating the silicon nitride sintered body 40 after the subsequent step (sintering step S16) . The BN powder layer is applied as a slurry of BN powder on one surface of each single sheet-type green sheet 30 by, for example, spraying, brush coating, roll coater, screen printing, or the like. The BN powder has a purity of 85% or more, and preferably has an average particle diameter of 1 µm to 20 µm.

The above is the description of the depositing step.

### <Degreasing Step>

Next, a degreasing step S15 will be described. This step is a step of degreasing a binder and a plasticizer contained in the single sheet-type green sheet 30 before the next step (sintering step S16) .

In this step, as an example, a plurality of the single sheet-type green sheets 30 (see Fig. 2D) laminated in the depositing step S14 are held in a temperature environment of 450°C to 750°C for 0.5 hours to 20 hours. As a result, the binders and the plasticizers contained in the plurality of the single sheet-type green sheets 30 are degreased.

The above is the description of the degreasing step.

### <Sintering Step>

Next, a sintering step S16 will be described. This step is a step of sintering the plurality of the single sheet-type green sheets 30 laminated in the depositing step S14 (hereinafter, referred to as the plurality of single sheet-type green sheets 30 in Fig. 2D) using a sintering device (not illustrated).

The sintering device is provided with a sintering furnace and a control device that controls a temperature of the sintering furnace. The sintering furnace includes a heater and a thermometer. Then, in this step, the plurality of single sheet-type green sheets 30 illustrated in Fig. 2D are accommodated in the sintering furnace, and the heater as an example is controlled by the control device according to a temperature control program described later.

Here, the temperature control program is a program that is stored in a storage device (for example, ROM or the like) included in the control device, and that controls the temperature of the heater while referring to a temperature profile based on temperature information of the thermometer included in the sintering furnace (for example, PID control or the like). Specifically, the temperature control program is a program setting the temperature profile in the sintering furnace as a profile that is formed with a temperature increasing region with a gradually heating region, a temperature maintaining region, and a cooling region, which proceed in the described order. Hereinafter, the technical significance of the gradually heating region, the temperature maintaining region, and the cooling region will be described.

### [Temperature Maintaining Region]

The temperature maintaining region is a temperature region where rearrangement of silicon nitride particles, production of β-type silicon nitride crystals, and grain growth of silicon nitride crystals are enhanced from the liquid phase produced in the gradually heating region to further densify the sintered body.

The temperature in the temperature maintaining region is preferably set to a temperature within the range of 1600°C to 2000°C and the maintaining time is preferably 1 hour to 30 hours in consideration of a size and an aspect ratio (a ratio of the major axis to the minor axis) of β-type silicon nitride particles, formation of holes due to volatilization of the sintering aid, and the like. In a case where the temperature in the temperature maintaining region is lower than 1600°C, the silicon nitride sintered body 40 is difficult to be densified. On the other hand, in a case where the temperature higher than 2000°C, the sintering aid volatilizes and the silicon nitride decomposes violently, which makes the silicon nitride sintered body 40 difficult to be densified. In a case where the temperature in the temperature maintaining region is the temperature within the range of 1600°C to 2000°C, a heating temperature in the temperature maintaining region may be set to change with time (for example, the temperature is gradually increased).

Here, the temperature in the temperature maintaining region is more preferably a temperature in the range of 1750°C to 1950°C, and even more preferably a temperature in the range of 1790°C to 1890°C. Furthermore, the temperature in the temperature maintaining region is preferably equal to or 50°C higher than the upper limit of a temperature in the gradually heating region, and more preferably equal to or 100°C to 300°C higher than the upper limit thereof. The maintaining time of the temperature maintaining region is more preferably 2 hours to 20 hours, and even more preferably 3 hours to 10 hours.

The above is the description of the sintering step. In addition, the above is the description of the method for manufacturing the silicon nitride sintered body 40 of the present embodiment.

### «Example»

Next, Example of the present embodiment (tests for deriving the preferable form of the present embodiment) will be described with reference to the drawings. Here, the tests for which the preferable form of the present embodiment has been derived are a first test, a second test, and a third test described below. The effects of the present embodiment described above will be described in consideration of a result of each test described later.

### <First Test>

Hereinafter, a first test will be described.

### [Method of First Test]

In this test, a test of observing a photograph of a cut section of the single sheet-type green sheet 30 produced in the cutting step S13 of the present embodiment and photographs of cut sections of single sheet-type green sheets produced in cutting steps of comparative examples (a first to fourth comparative examples) described below was performed. Specifically, cut sections (cut surfaces and peripheral portions thereof) of a sample of the single sheet-type green sheet 30 of the present embodiment and samples of the single sheet-type green sheets of the first to fourth comparative examples each were photographed from the lower surface side, and observed. Then, the enlarged photograph of each sample was observed to confirm the presence or absence of cutting chips and burrs on the cut surface. As a result, the sample with at least one of cutting chips or burrs was regarded as unacceptable, and the sample without both was regarded as acceptable.

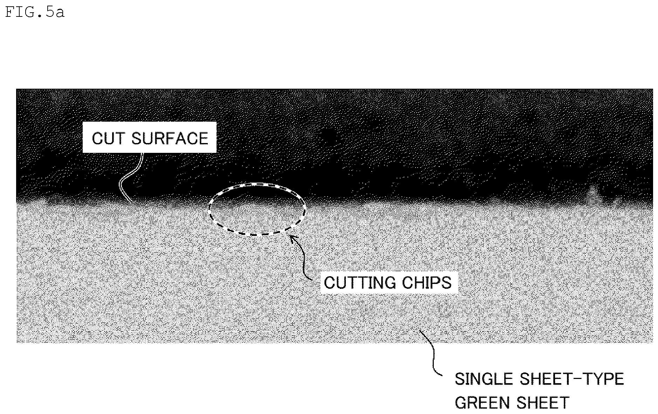

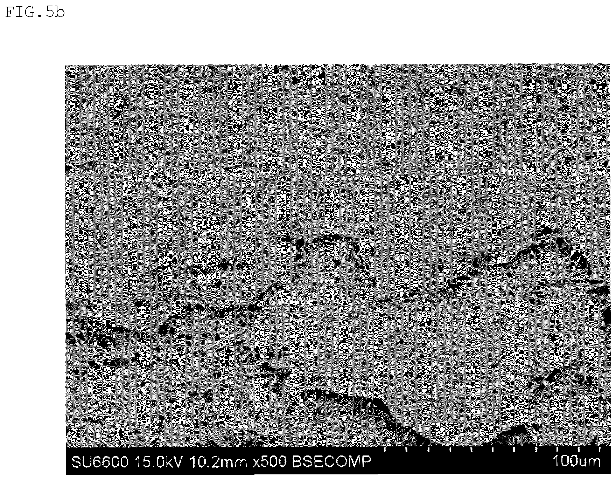

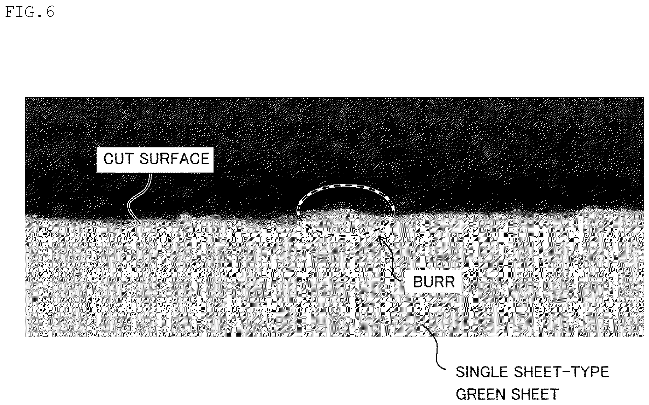

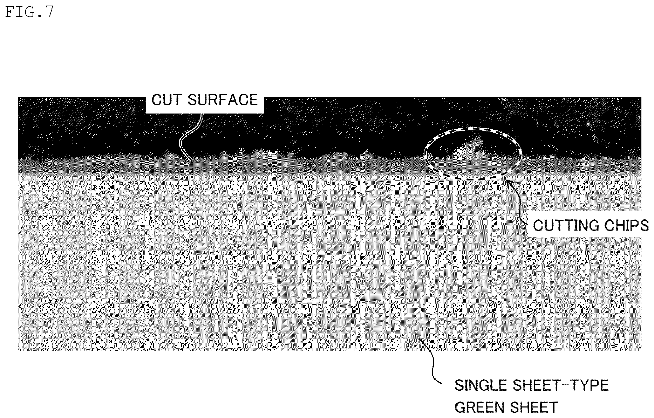

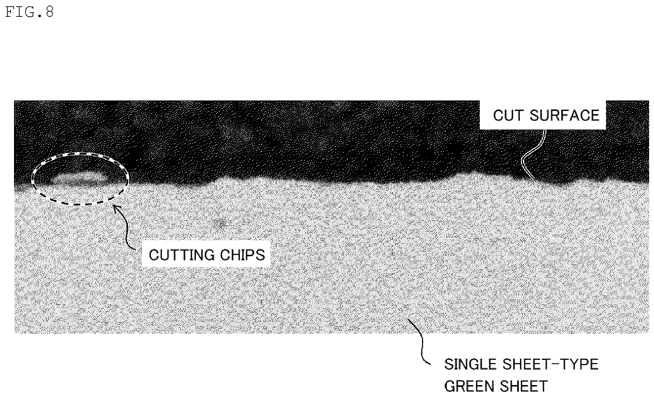

Here, the single sheet-type green sheet (see Figs. 5A and 5B) of the first comparative example was produced such that the strip-shaped green sheet 20 was cut by an extrusion blade (not illustrated) . The single sheet-type green sheet (see Fig. 6) of the second comparative example was produced such that the strip-shaped green sheet 20 was cut by a Thomson blade (not illustrated). The single sheet-type green sheet (see Fig. 7) of the third comparative example was produced such that the strip-shaped green sheet 20 was cut by shirring (not illustrated) . The single sheet-type green sheet (see Fig. 8) of the fourth comparative example was produced such that the strip-shaped green sheet 20 was cut by an ultrasonic cutter (not illustrated). The single sheet-type green sheet 30 of the present embodiment was produced by using an infrared laser (IR laser) provided with the irradiation portion 224 (see Figs. 2B and 2C).

### [Result and Discussion of First Test]

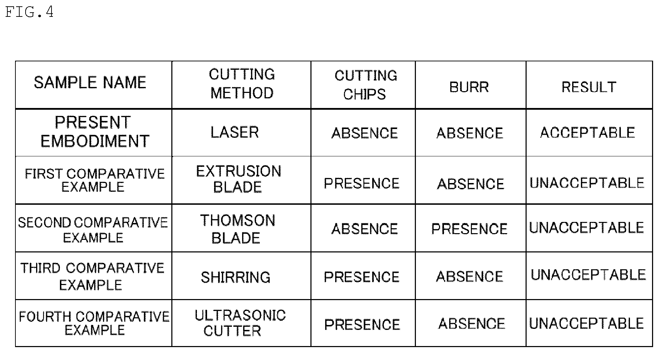

Fig. 4 is a table summarizing conditions and observation results of each sample of this test.

The first to fourth comparative examples were all unacceptable. Here, in the first comparative example (extrusion blade), cutting chips were observed (see Figs. 4, 5A, and 5B). In the second comparative example (Thomson blade), burrs were observed (see Figs. 4 and 6). In the third comparative example (shirring), cutting chips were observed (see Figs. 4 and 7) . In the fourth comparative example (ultrasonic cutter), cutting chips were observed (see Figs. 4 and 8) .

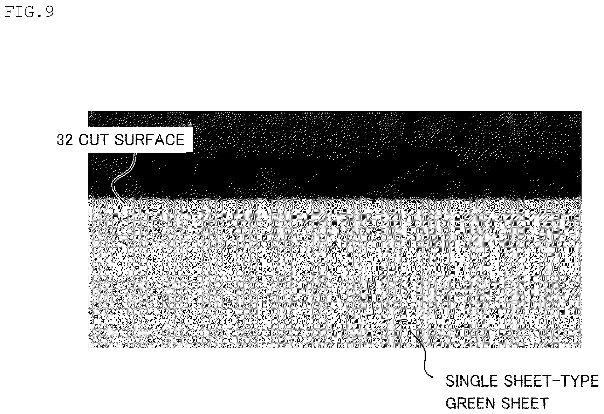

The present embodiment (laser) was acceptable (see Figs. 3, 4, and 9).

It is presumed that fracture surfaces were generated during the cutting since all of the first to fourth comparative examples were produced by a contact-type cutting unit. On the other hand, it is presumed that a fracture surface was not generated (or hardly generated) during the cutting as in the case of the first to fourth comparative examples since the present embodiment is produced by a non-contact-type cutting unit.

As described above, according to the method for manufacturing the single sheet-type green sheet 30 of the present embodiment, chips from the cut surface are not generated (or hardly generated) in a case where the strip-shaped green sheet 20 is cut to obtain the single sheet-type green sheet 30. In addition, according to the method for manufacturing the single sheet-type green sheet 30 of the present embodiment, the fracture surface is not generated (or hardly generated) and cracks near the cut surface also are not generated (or hardly generated) during the cutting. In the method for manufacturing the single sheet-type green sheet 30 of the present embodiment, metal powder from the cutting blade is not generated since the cutting blade is not used during the cutting. Along with these, according to the method for manufacturing the silicon nitride sintered body 40 of the present embodiment, the yield is higher than that in the case where the contact-type cutting unit is used in the cutting step.

The above is the description of the first test.

### <Second Test>

Next, the second test will be described.

### [Method of Second Test]

In this test, the single sheet-type green sheet 30 was produced using a carbon dioxide laser, an infrared laser (IR laser), and an ultraviolet laser (UV laser) as the irradiation portion 224 (see Figs. 2B and 2C), the cut surface 32 (see Fig. 2B and Fig. 3) was observed, and time periods required for cutting operations (processing time) were compared to each other.

Here, center wavelengths of a laser beam LB of the carbon dioxide laser were 9360 nm and 10600 nm, a center wavelength of a laser beam LB of the infrared laser was 1064 nm, and a center wavelength of the laser beam LB of the ultraviolet laser was 355 nm.

### [Result and Discussion of Second Test]

Cutting chips and burrs were not observed on the cut surface 32 (laser cut surfaces) in any cases (a result is the same result as in the first test illustrated in Table of Fig. 4) . In addition, the processing time at the same output was shorter in the order of carbon dioxide laser, infrared laser, and ultraviolet laser (a graph of the test result or the like is not described).

Therefore, in the cutting step S13 of the present embodiment, chips and burrs from the cut surface 32 are not generated (or hardly generated) even using any lasers as the irradiation portion 224. However, from the viewpoint of shortening the processing time, it can be said that the carbon dioxide laser, the infrared laser, and the ultraviolet laser are preferably used in this order.

Regarding the infrared laser and the ultraviolet laser, the former has a shorter processing speed than that of the latter, and the reason is presumed to be as follows. That is, it is presumed that thermal processing with respect to the cutting of the strip-shaped green sheet 20 is preferentially performed before optical processing, and the laser beam LB from the infrared laser is more easily converted due to heat than the laser beam LB from the ultraviolet laser. Here, a bandgap of the strip-shaped green sheet 20 is about 5.0 eV, whereas a bandgap of the ultraviolet laser is 3.5 eV corresponding to the center wavelength of 355 nm. Therefore, it is presumed that the laser beam LB from the ultraviolet laser is difficult to sufficiently photoexcite the strip-shaped green sheet 20.

The above is the description of the second test.

### <Third Test>

Next, the third test will be described.

### [Method of Third Test]

In this test, samples each of which was obtained such that three single sheet-type green sheets 30 that have been cut in the cutting step S13 of the present embodiment were sintered in the sintering step S16, and samples each of which was obtained such that three single sheet-type green sheets that have been cut using press processing (extrusion blade) in the cutting step were sintered in the sintering step S16 were produced. Subsequently, surface roughnesses Ra, Ry, and Rz of these samples were measured based on JIS B 0601-1994.

Here, each of the carbon dioxide laser, the infrared laser, and the ultraviolet laser was used for cutting each sample of the present embodiment in the cutting step S13.

### [Result and Discussion of Third Test]

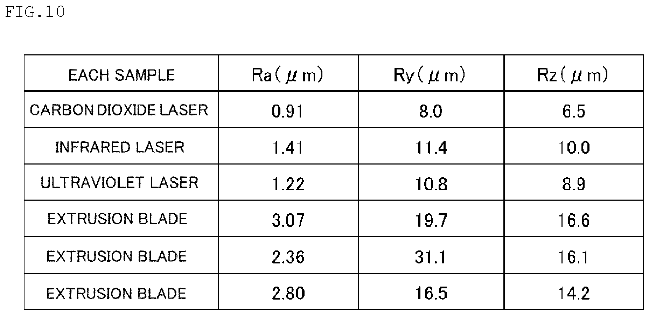

Table in Fig. 10 summarizes conditions and measurement results of the third test. This test is not a test for identifying the quality of each sample from the measurement results of the surface roughnesses Ra, Ry, and Rz of each sample. However, from the result of the first test, it can be said that the silicon nitride sintered body 40 manufactured in the steps including the cutting step S13 of the present embodiment satisfies the measurement result in each sample using the carbon dioxide laser, the infrared laser, and the ultraviolet laser in Table of Fig. 10.

Therefore, it can be said that in the silicon nitride sintered body 40 of the present embodiment, the surface roughness Ra of the end surface 42 (see Fig. 2D, in other words, the laser cut surface after sintering or the sintered surface of the laser cut surface) is equal to or greater than 0.5 um and equal to or smaller than 2.0 um, and the surface roughness Rz of the end surface 42 is preferably equal to or greater than 5.0 um and equal to or smaller than 12.0 um. Along with this, it can be said that in the single sheet-type green sheet 30 of the present embodiment, the surface roughness Ra of the cut surface 32 (see Figs. 2B and 3) is equal to or greater than 0.5 um and equal to or smaller than 2.0 um, and the surface roughness Rz of the cut surface 32 is preferably equal to or greater than 5.0 um and equal to or smaller than 12.0 µm.

The above is the description of Example of the present embodiment.

As described above, the present embodiment has been described as an example of the present invention, but the present invention is not limited to the present embodiment. The technical scope of the present invention also includes, for example, the following forms (modifications).

For example, in the description of the present embodiment, an example of the ceramic powder has been described as silicon nitride. However, an example of the ceramic powder may be another ceramic powder. For example, aluminum nitride may be used.

In the description of the molding step S12 of the present embodiment, it is assumed that the molding step S12 is performed by doctor blade molding. However, as long as the slurry 10 can be molded into the strip-shaped green sheet 20, another method may be adopted as the molding method. For example, extrusion molding may be used.

In the description of the cutting step S13 of the present embodiment, the strip-shaped green sheet 20 is cut while the irradiation portion 224 moves from one end side to the other end side of the strip-shaped green sheet 20 in the lateral direction. However, as long as the single sheet-type green sheet 30 can be obtained by cutting the strip-shaped green sheet 20 as a result, a cut portion of the strip-shaped green sheet 20 may not be a linear portion crossing over from one end side to the other end side of the strip-shaped green sheet 20 in the lateral direction as in the case of the present embodiment. For example, the strip-shaped green sheet 20 may be cut such that a hole that has a shape of the single sheet-type green sheet 30 is made in the strip-shaped green sheet 20 to separate (or hollow out) the single sheet-type green sheet 30 from the strip-shaped green sheet 20. That is, the single sheet-type green sheet 30 obtained by cutting the strip-shaped green sheet 20 may have at least a part of all end surfaces thereof as a cut surface.

## Claims

1. A method for manufacturing a single sheet-type green sheet (30) comprising
a transporting step of transporting a strip-shaped green sheet (20) using a sheet transporting mechanism (210), and
an irradiation step of intermittently irradiating a strip-shaped green sheet (20) that contains a ceramic with a laser beam (LB) to cut and separate the strip-shaped green sheet (20) to obtain the single sheet-type green sheet (30),
wherein in the transporting step the strip-shaped green sheet (20) is transported to the irradiation step along a longitudinal direction of the strip-shaped green sheet (20) using a sheet transporting mechanism (210), and
the irradiation step is performed using a cutting portion (220) comprising an irradiation portion (224) and a moving mechanism (226), wherein the moving mechanism (226) causes the irradiation portion (224) to move and stop repeatedly so as to intermittently irradiate the laser beam (LB) by repeatedly irradiating the laser beam (LB) for a certain time period and non-irradiating for a certain time period.

2. The method for manufacturing a single sheet-type green sheet (30) according to claim 1, wherein the laser beam (LB) emitted from the irradiation portion (224) is a carbon dioxide laser beam.

3. The method for manufacturing a single sheet-type green sheet (30) according to claim 1 or 2, further comprising a step of performing doctor blade molding or extrusion molding on a slurry (10) containing a ceramic powder to have a strip shape to obtain the strip-shaped green sheet (20), the step being performed before the transporting step.

4. The method for manufacturing a single sheet-type green sheet (30) according to claim 3, wherein the ceramic powder includes silicon nitride powder or aluminum nitride powder.

5. A method for manufacturing a silicon nitride sintered body (40) comprising heating and sintering the single sheet-type green sheet (30) that is manufactured by the method for manufacturing a single sheet-type green sheet (30) according to any one of claims 1 to 4 to obtain a silicon nitride sintered body (40).

6. A single sheet-type green sheet (30) obtained by a method of any one of claims 1 to 4 and having a laser cut surface (32) on at least one side surface,
wherein the laser cut surface (32) has a surface roughness Ra of equal to or greater than 0.5 um and equal to or smaller than 2.0 um, and
the laser cut surface (32) has a surface roughness Rz of equal to or greater than 5.0 um and equal to or smaller than 12.0 um.

7. A silicon nitride sintered body (40) formed in a sheet shape obtained by the method of claim 5, the silicon nitride sintered body (40) comprising an end surface (42), wherein the end surface (42) has a surface roughness Ra of equal to or greater than 0.5 µm and equal to or smaller than 2.0 um, and the end surface (42) has a surface roughness Rz of equal to or greater than 5.0 um and equal to or smaller than 12.0 µm.

## Patentansprüche

1. Verfahren zur Herstellung einer einlagigen Grünfolie (30), umfassend
einen Transportschritt des Transportierens einer bandförmigen Grünfolie (20) unter Verwendung eines Folientransportmechanismus (210), und
einen Bestrahlungsschritt des intermittierenden Bestrahlens einer bandförmigen Grünfolie (20), die eine Keramik enthält, mit einem Laserstrahl (LB), um die bandförmige Grünfolie (20) zu schneiden und zu trennen, um die einlagige Grünfolie (30) zu erhalten,
wobei in dem Transportschritt die bandförmige Grünfolie (20) zu dem Bestrahlungsschritt entlang einer Längsrichtung der bandförmigen Grünfolie (20) unter Verwendung eines Folientransportmechanismus (210) transportiert wird, und
der Bestrahlungsschritt unter Verwendung eines Schneidabschnitts (220) durchgeführt wird, der einen Bestrahlungsabschnitt (224) und einen Bewegungsmechanismus (226) umfasst, wobei der Bewegungsmechanismus (226) bewirkt, dass sich der Bestrahlungsabschnitt (224) wiederholt bewegt und anhält, um den Laserstrahl (LB) intermittierend auszustrahlen, indem der Laserstrahl (LB) wiederholt für eine bestimmte Zeitdauer ausgestrahlt und für eine bestimmte Zeitdauer nicht ausgestrahlt wird.

2. Verfahren zur Herstellung einer einlagigen Grünfolie (30) nach Anspruch 1, wobei der von dem Bestrahlungsabschnitt (224) emittierte Laserstrahl (LB) ein Kohlendioxidlaserstrahl ist.

3. Verfahren zur Herstellung einer einlagigen Grünfolie (30) nach Anspruch 1 oder 2, das ferner einen Schritt des Durchführens eines Rakelformens oder eines Extrusionsformens einer Aufschlämmung (10), die ein Keramikpulver enthält, um eine Bandform aufzuweisen, um die bandförmige Grünfolie (20) zu erhalten, umfasst, wobei der Schritt vor dem Transportschritt durchgeführt wird.

4. Verfahren zur Herstellung einer einlagigen Grünfolie (30) nach Anspruch 3, wobei das Keramikpulver Siliziumnitrid-Pulver oder Aluminiumnitrid-Pulver enthält.

5. Verfahren zur Herstellung eines Siliziumnitrid-Sinterkörpers (40), umfassend Erhitzen und Sintern der einlagigen Grünfolie (30), die nach dem Verfahren zur Herstellung einer einlagigen Grünfolie (30) nach einem der Ansprüche 1 bis 4 hergestellt wurde, um einen Siliziumnitrid-Sinterkörper (40) zu erhalten.

6. Einlagige Grünfolie (30), die durch ein Verfahren nach einem der Ansprüche 1 bis 4 erhalten wurde und eine lasergeschnittene Oberfläche (32) auf mindestens einer Seitenfläche aufweist,
wobei die lasergeschnittene Oberfläche (32) eine Oberflächenrauhigkeit Ra von gleich oder größer als 0,5 um und gleich oder kleiner als 2,0 µm aufweist, und
die lasergeschnittene Oberfläche (32) eine Oberflächenrauhigkeit Rz von gleich oder größer als 5,0 µm und gleich oder kleiner als 12,0 µm aufweist.

7. Siliziumnitrid-Sinterkörper (40), ausgebildet in einer Folienform, erhalten durch das Verfahren nach Anspruch 5, wobei der Siliziumnitrid-Sinterkörper (40) eine Endfläche (42) aufweist, wobei die Endfläche (42) eine Oberflächenrauhigkeit Ra von gleich oder größer als 0,5 µm und gleich oder kleiner als 2,0 µm aufweist und die Endfläche (42) eine Oberflächenrauhigkeit Rz von gleich oder größer als 5,0 µm und gleich oder kleiner als 12,0 µm aufweist.

## Revendications

1. Procédé de fabrication d'une feuille verte de type monocouche (30), comprenant
une étape de transport consistant à transporter une feuille verte en forme de bande (20) à l'aide d'un mécanisme de transport de feuille (210), et
une étape d'irradiation consistant à irradier par intermittence une feuille verte en forme de bande (20) contenant une céramique par un faisceau laser (LB) pour couper et séparer la feuille verte en forme de bande (20) afin d'obtenir la feuille verte de type monocouche (30),
dans lequel, lors de l'étape de transport, la feuille verte en forme de bande (20) est transportée vers l'étape d'irradiation le long d'une direction longitudinale de la feuille verte en forme de bande (20) à l'aide d'un mécanisme de transport de feuille (210), et
l'étape d'irradiation est réalisée à l'aide d'une partie de coupe (220) comprenant une partie d'irradiation (224) et un mécanisme de déplacement (226), le mécanisme de déplacement (226) entraînant le déplacement et l'arrêt répétés de la partie d'irradiation (224) de manière à irradier de façon intermittente le faisceau laser (LB) en irradiant le faisceau laser (LB) pendant une certaine période de temps et en ne l'irradiant pas pendant une certaine période de temps, de façon répétée.

2. Procédé de fabrication d'une feuille verte de type monocouche (30) selon la revendication 1, dans lequel le faisceau laser (LB) émis par la partie d'irradiation (224) est un faisceau laser à dioxyde de carbone.

3. Procédé de fabrication d'une feuille verte de type monocouche (30) selon la revendication 1 ou 2, comprenant en outre une étape consistant à réaliser un moulage par racle ou un moulage par extrusion d'une suspension (10) contenant une poudre céramique pour avoir une forme de bande afin d'obtenir la feuille verte en forme de bande (20), l'étape étant réalisée avant l'étape de transport.

4. Procédé de fabrication d'une feuille verte de type monocouche (30) selon la revendication 3, dans lequel la poudre de céramique comprend de la poudre de nitrure de silicium ou de la poudre de nitrure d'aluminium.

5. Procédé de fabrication d'un corps fritté en nitrure de silicium (40) comprenant le chauffage et le frittage de la feuille verte de type monocouche (30) qui est fabriquée par le procédé de fabrication d'une feuille verte de type monocouche (30) selon l'une quelconque des revendications 1 à 4 pour obtenir un corps fritté en nitrure de silicium (40).

6. Feuille verte de type monocouche (30) obtenue par un procédé de l'une quelconque des revendications 1 à 4 et présentant une surface découpée au laser (32) sur au moins une surface latérale,
dans lequel la surface découpée au laser (32) présente une rugosité de surface Ra égale ou supérieure à 0,5 um et égale ou inférieure à 2,0 µm, et.
la surface découpée au laser (32) présente une rugosité de surface Rz égale ou supérieure à 5,0 um et égale ou inférieure à 12,0 um.

7. Corps fritté (40) en nitrure de silicium en forme de feuille obtenu par le procédé de la revendication 5, le corps fritté (40) en nitrure de silicium comprenant une surface d'extrémité (42), la surface d'extrémité (42) ayant une rugosité de surface Ra égale ou supérieure à 0,5 µm et égale ou inférieure à 2,0 um, et la surface d'extrémité (42) ayant une rugosité de surface Rz égale ou supérieure à 5,0 um et égale ou inférieure à 12,0 µm.
